# EUROPEAN PATENT APPLICATION

(11) **EP 4 760 950 A1**
(43) Date of publication of application: **17.06.2026**
(21) Application number: 25809984.5
(22) Date of filing: 24.01.2025
(51) Int. Cl.: H01M 50/383, H01M 50/262, H01M 50/289, H01M 50/342, H01M 50/249

(54) **BATTERY PACK**

(30) Priority: 08.05.2024 KR 20240060522
(71) Applicant: LG Energy Solution, Ltd., Seoul 07335 (KR)
(72) Inventor: LEE, Jung-Hoon, Daejeon 34122 (KR); JUNG, Hye-Mi, Daejeon 34122 (KR)
(74) Representative: Plasseraud IP
(86) International application number: PCT/KR2025/001537
(87) International publication number: WO 2025/234563

(57) **Abstract**

Disclosed is a battery pack. The battery pack includes a case providing a space therein and having a pack cover; a battery module located inside the case; a module cover located between the battery module and the pack cover and spaced apart from the pack cover; and a fastening member configured to fix the inner cover and the pack cover

## Description

### TECHNICAL FIELD

The present disclosure relates to a battery pack.

The present application claims priority to Korean Patent Application No. 10-2024-0060522 filed on May 8, 2024 in the Republic of Korea, the disclosure of which is incorporated herein by reference.

### BACKGROUND ART

As the demand for portable electronic products such as smartphones, tablet PCs, and smart watches increases significantly and electric vehicles become increasingly widespread, research is being actively conducted on batteries installed in these vehicles, especially secondary batteries that allow repeated charging and discharging.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be referred to as a battery cell. In addition, multiple battery modules may be connected to each other to form a battery pack.

However, if a plurality of battery modules are included in the battery pack as above and each battery module includes a plurality of battery cells, the battery pack may be vulnerable to a thermal chain reaction between battery modules or between battery cells. For example, if an event such as thermal runaway occurs within one battery module, the thermal runaway needs to be prevented from propagating to other battery modules or other battery cells. If the propagation of thermal runaway between battery modules or battery cells is not properly prevented, an event occurring in a specific battery module or battery cell may cause a thermal chain reaction in other battery modules or other battery cells, which may cause an explosion or fire or enlarge the scale thereof.

In particular, when an event such as thermal runaway occurs in one battery module, gas or flame may be randomly discharged to the outside. At this time, if the discharge of gas or flame is not properly controlled, the gas or flame may be discharged toward other battery modules, which may cause a thermal chain reaction in other battery modules. In particular, a module terminal may exist on the front side of the battery module, and a configuration, such as a module bus bar, may exist for electrical connection with other battery modules or battery packs. Accordingly, if flame is discharged to the front side of the battery module, the module terminals may be damaged and an electrical short may occur within the battery pack. In addition, since other battery modules may exist on the front side of the battery module, if flame is discharged to the front side of a specific battery module, the discharged flame may be directed to other battery modules, which may easily cause a fire to spread between battery modules.

If the thermal propagation between battery modules or battery cells are not properly controlled, it may result in a sudden voltage drop in the battery module or battery pack. This may cause a sudden shutdown of the device equipped with the battery module or battery pack, resulting in unexpected damage. For example, if a sudden voltage drop in the battery pack occurs while an electric vehicle is in operation, there is no time to move the electric vehicle to a safe location.

Moreover, if a fire or explosion occurs suddenly due to failure to properly control thermal propagation between battery modules or battery cells, there is a high possibility of causing casualties to users. For example, if thermal runaway occurs in an electric vehicle, if a certain amount of time is not secured before it progresses to a full-blown fire, the occupants may not be able to escape safely.

### DISCLOSURE

### Technical Problem

Therefore, the present disclosure is designed to solve the problems of the related art, and therefore the present disclosure is directed to providing a battery pack with an improved structure to appropriately control the emission of flame, etc. generated inside a battery module, and a vehicle including the same.

In addition, the present disclosure is directed to providing a structure that facilitates expansion of the inner space of a battery pack when a thermal event occurs.

In addition, the present disclosure is directed to providing a structure that allows the pack cover to easily inflate when a thermal event occurs.

In addition, the present disclosure is directed to providing a structure capable of suppressing heat propagation between battery modules.

However, the technical problems that the present disclosure seeks to solve are not limited to the problems described above, and other problems not mentioned herein will be clearly understood by those skilled in the art from the following description.

### Technical Solution

In one aspect of the present disclosure, there is provided a battery pack comprising: a case providing a space therein and having a pack cover; a battery module located inside the case; a module cover located between the battery module and the pack cover and spaced apart from the pack cover; and a fastening member configured to fix the inner cover and the pack cover.

The battery pack may further comprise a spacer located between the inner cover and the pack cover.

In addition, the fastening member may penetrate the spacer.

In addition, the battery module may include a module case providing a space therein and having a venting hole facing the module cover; and a battery cell located inside the module case.

In addition, the module cover may have a discharge hole facing the venting hole.

In addition, the venting hole may be provided in plurality, and the discharge hole may be provided in plurality so as to correspond to the plurality of venting holes in one-to-one relationship.

In addition, the battery pack may further comprise a venting cover located between the module cover and the pack cover and configured to cover the discharge hole.

In addition, the venting cover may be located between the module cover and the spacer.

In addition, the venting cover may have a score line facing the discharge hole.

In addition, the module cover may include a top cover configured to cover an upper surface of the battery module; and a side cover configured to extend from the top cover and cover a side surface of the battery module.

In addition, the module cover may be configured to be movable outward from the battery module when a thermal event occurs from the battery module.

In another aspect of the present disclosure, there is also provided a vehicle, comprising the battery pack according to the present disclosure.

### Advantageous Effects

According to at least one of the embodiments of the present disclosure, when gas or flame is generated inside the battery module, the discharge of the gas or flame may be appropriately controlled.

According to at least one of the embodiments of the present disclosure, the electrical safety of the battery pack may be improved.

According to at least one of the embodiments of the present disclosure, when a thermal event occurs, the inner space of the battery pack expands, thereby preventing an explosion of the battery pack.

According to at least one of the embodiments of the present disclosure, heat propagation between battery modules may be suppressed when a thermal event occurs.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is an exploded view showing some components of the battery pack according to the first embodiment of the present disclosure.
FIG. 3 is a diagram showing a battery module of FIG. 2.
FIG. 4 is a diagram showing the battery module of FIG. 3, in which some components are exploded.
FIG. 5 is an enlarged view showing some components of the battery pack according to the first embodiment of the present disclosure.
FIG. 6 is a partial cross-sectional view of the first embodiment, taken along the cutting line A-A' of FIG. 1.
FIG. 7 is a cross-sectional view of the first embodiment, taken along the cutting line A-A', when a thermal event occurs.
FIG. 8 is an exploded view showing some components of the battery pack according to the second embodiment of the present disclosure.
FIG. 9 is an enlarged view showing some components of the battery pack according to the second embodiment of the present disclosure.
FIG. 10 is a partial cross-sectional view of the second embodiment, taken along the cutting line A-A' of FIG. 1.
FIG. 11 is a cross-sectional view of the second embodiment, taken along the cutting line A-A', when a thermal event occurs.
FIG. 12 is an exploded view showing some components of the battery pack according to the third embodiment of the present disclosure.
FIG. 13 is an enlarged view showing some components of the battery pack according to the third embodiment of the present disclosure.
FIG. 14 is a partial cross-sectional view of the third embodiment, taken along the cutting line A-A' of FIG. 1.
FIG. 15 is a cross-sectional view of the third embodiment, taken along the cutting line A-A', when a thermal event occurs.
FIG. 16 is an exploded view showing some components of the battery pack according to the fourth embodiment of the present disclosure.
FIG. 17 is an enlarged view showing some components of the battery pack according to the fourth embodiment of the present disclosure.
FIG. 18 is a partial cross-sectional view of the fourth embodiment, taken along the cutting line A-A' of FIG. 1.
FIG. 19 is a cross-sectional view of the fourth embodiment, taken along the cutting line A-A', when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

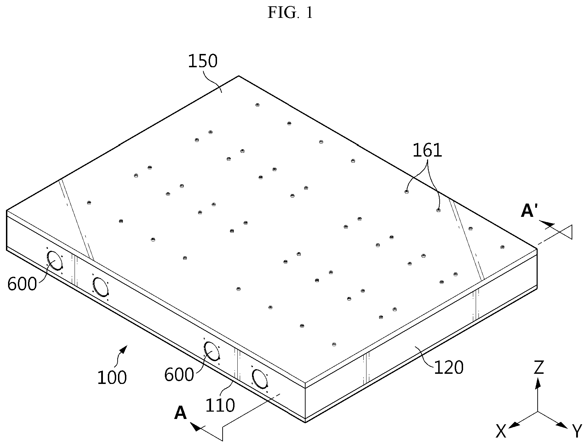

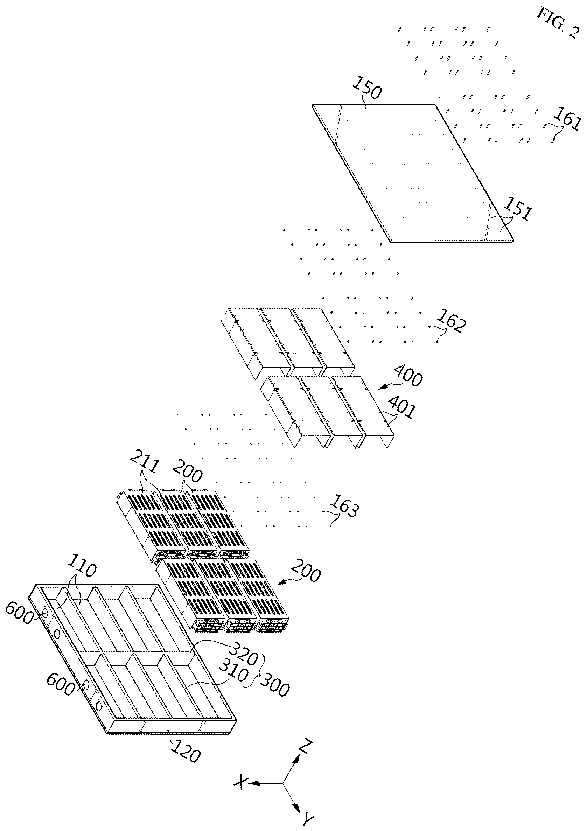

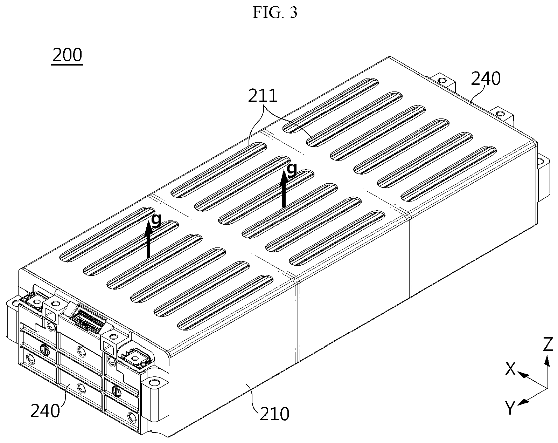

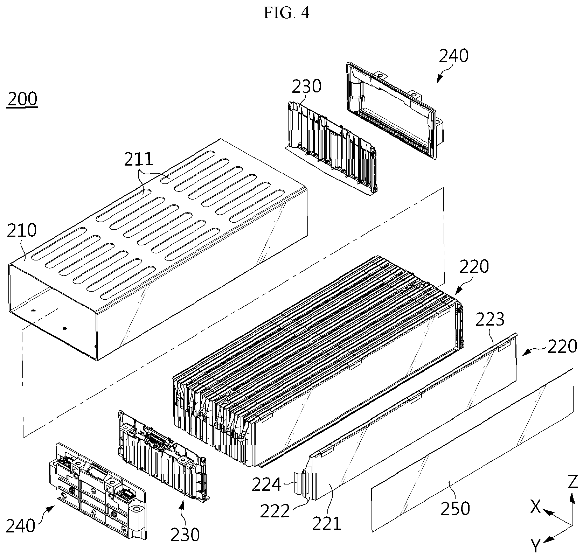

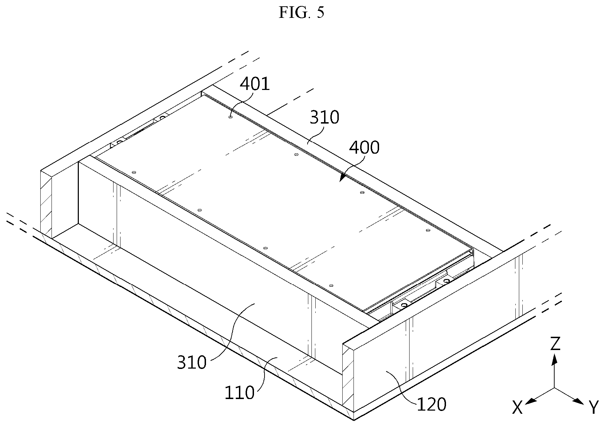

FIG. 1 is a diagram showing a battery pack according to an embodiment of the present disclosure. FIG. 2 is an exploded view showing some components of the battery pack according to the first embodiment of the present disclosure. FIG. 3 is a diagram showing a battery module 200 of FIG. 2. FIG. 4 is a diagram showing the battery module 200 of FIG. 3, in which some components are exploded. FIG. 5 is an enlarged view showing some components of the battery pack according to the first embodiment of the present disclosure.

Referring to FIGS. 1 to 5, the battery pack according to the first embodiment of the present disclosure may include a case 100, a battery module 200, a module cover 400, and a fastening member 161.

The case 100 may include a base plate 110, a side wall 120, and a pack cover 150. The base plate 110 may have a rectangular shape. The base plate 110 may have a flat shape. The base plate 110 may form an outer appearance of the battery pack. The base plate 110 may provide an inner space of the battery pack.

The side wall 120 may be installed, fastened, coupled, fixed or attached to the upper surface of the base plate 110. The side wall 120 may be composed of four pieces. The side wall 120 may be arranged along the periphery of the base plate 110. The side wall 120 may form the outer appearance of the battery pack. The side wall 120 may provide an inner space.

The pack cover 150 may have a rectangular plate shape. The pack cover 150 may have a flat plate shape. The pack cover 150 may form the outer appearance of the battery pack. The pack cover 150 may cover the inner space of the battery pack.

The battery module 200 may include a plurality of battery cells 220. At this time, the battery cell 220 may mean a secondary battery. In particular, the battery cell 220 may be a pouch-type secondary battery. However, the shape of the battery cell 220 is not limited to a pouch shape, and may have various shapes such as a cylindrical shape or a rectangular parallelepiped shape.

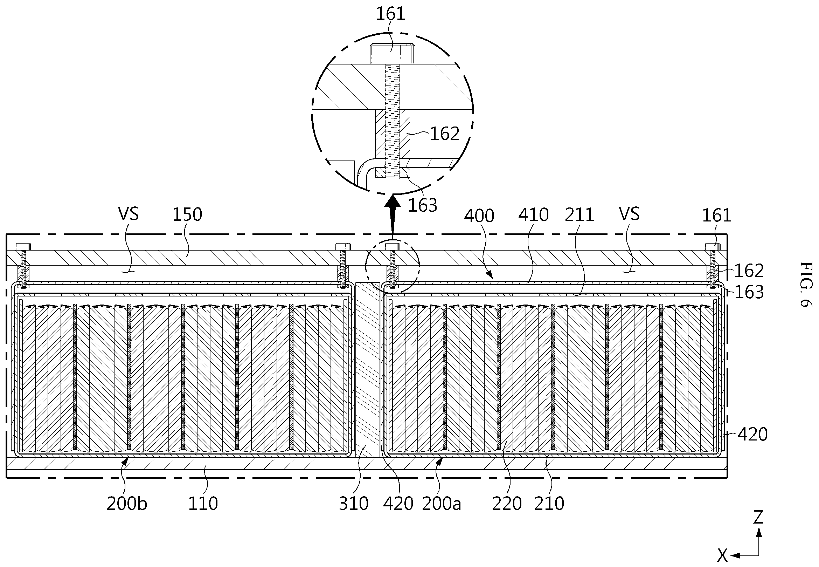

The module cover 400 may be positioned between the battery module 200 and the pack cover 150. Also, the module cover 400 may be spaced apart from the pack cover 150. The space between the pack cover 150 and the module cover 400 may be referred to as a venting space VS (see FIG. 6). The module cover 400 may cover the upper surface of the battery module 200.

The fastening member 161 may fix the module cover 400 and the pack cover 150. The module cover 400 and the pack cover 150 may be relatively fixed by the fastening member 161. Alternatively, the fastening member 161 may couple, fasten or fix the module cover 400 to the pack cover 150 while maintaining a space between the module cover 400 and the pack cover 150.

According to this configuration of the present disclosure, the thermal safety of the battery pack may be improved. When a thermal event occurs, a venting gas g may be discharged from the battery module 200. The module cover 400 and the pack cover 150 may move in the outward direction, upward direction, or Z-axis direction of the battery module 200 by the pressure of the venting gas g. As a result, the pressure inside the battery pack may be prevented from rapidly increasing.

In addition, according to this configuration of the present disclosure, the venting space VS between the module cover 400 and the pack cover 150 may function as a path for the venting gas g. As a result, the path for the venting gas g may be stably secured.

In addition, according to this configuration of the present disclosure, the module cover 400 may block the venting gas g generated outside the battery module 200 from flowing into the battery module 200. As a result, propagation of a thermal event may be prevented.

Referring to FIGS. 1 to 5, the battery pack according to the first embodiment of the present disclosure may include a spacer 162 positioned between the module cover 400 and the pack cover 150. The spacer 162 may maintain the module cover 400 and the pack cover 150 to be spaced apart.

The spacer 162 may be fastened, coupled, fixed or attached to the upper surface of the module cover 400. Alternatively, the spacer 162 may be formed integrally with the module cover 400.

Alternatively, the spacer 162 may be fastened, coupled, fixed or attached to the lower surface of the pack cover 150. Alternatively, the spacer 162 may be formed integrally with the pack cover 150.

According to this configuration of the present disclosure, the thermal safety of the battery pack may be improved. The venting space VS may be stably secured by the spacer 162.

Referring to FIGS. 1 to 5, the battery pack according to the first embodiment of the present disclosure may include a partition wall and a venting device 600.

The partition wall 300 may include a first partition wall 310 and a second partition wall 320. The partition wall 300 may be provided in plurality. The partition wall 300 may be installed, fastened, fixed, coupled, or attached to the upper surface of the base plate 110. The partition wall 300 may partition the inner space of the battery pack. The battery module 200 or the battery cell 220 may be positioned in the space partitioned by the partition wall 300.

The venting device 600 may be installed on the side wall 120. For example, the venting device 600 may be installed on the side wall 120 at the front side. For example, the venting device 600 may be a gas valve. The venting device 600 may open when the pressure inside the case 100 increases to discharge gas. In addition, the venting device 600 may block external air from flowing into the case 100. The venting device 600 may be provided in plurality.

Referring to FIGS. 1 to 5, the battery pack according to the first embodiment of the present disclosure may include a plurality of battery modules 200. The battery module 200 may include a module case 210, a plurality of battery cells 220, a pad 250, a bus bar frame assembly 230, and an end cover 240.

The module case 210 may have a rectangular parallelepiped shape. The module case 210 may also be referred to as a frame 210. The module case 210 may provide a space therein. The module case 210 may have a top plate, a bottom plate, and a pair of side plates. In addition, the module case 210 may have a shape in which the front and rear surfaces are open.

The module case 210 may have a venting hole 211 in the top plate. The venting hole 211 may communicate the inside and the outside of the module case 210. In addition, the venting hole 211 may face the module cover 400. The venting hole 211 may be provided in plurality. The plurality of venting holes 211 may face the module cover 400.

The battery cell 220 may be accommodated inside the module case 210. The plurality of battery cells 220 may be stacked along the right and left direction or the Y-axis direction. The battery cell 220 may include an accommodation portion 221 accommodating an electrode assembly, a first sealing portion 222 protruding forward and rearward from the accommodation portion 221, and a second sealing portion 223 protruding upward from the accommodation portion 221. In addition, the battery cell 220 may include electrode leads 224 protruding forward and rearward from the first sealing portion 222, respectively. Each battery cell 220 may extend along the front and rear direction or the X-axis direction. The electrode leads 121 may protrude forward and rearward from each battery cell 220.

The pad 250 may be disposed between the plurality of battery cells 220. The pad 250 may be arranged between at least some of the battery cells 220 and/or at the periphery of the stack. For example, the pad 250 may be configured to be arranged between every four battery cells 220 stacked in the right and left direction.

The pad 250 may contain an elastic material to enable swelling absorption of the battery cell 220. For example, the pad 250 may contain a foam material such as polyurethane. Alternatively, the pad 250 may contain a material capable of blocking heat or flame. For example, the pad 250 may contain with an insulating or fire-retardant material such as silicone or mica.

The bus bar frame assembly 230 may be provided on the front and rear sides of the plurality of battery cells 220, respectively. The bus bar frame assembly 230 may be electrically connected to the electrode leads 121 of the plurality of battery cells 220.

The pair of end covers 240 may be coupled to the front and rear sides of the module case 210, respectively. The pair of end covers 240 may cover the front and rear surfaces of the module case 210. The end covers 240 may have a rectangular shape.

The battery module 200 may be installed, fastened, coupled, fixed, or attached to the upper surface of the base plate 110. When a thermal event occurs from the battery module 200, the venting gas g may be discharged through the venting hole 211. The venting hole 211 may face the inner surface of the pack cover 150. The venting gas g discharged through the venting hole 211 may push the pack cover 150 outward, upward, or in the Z-axis direction. The battery module 200 may be located in the space defined by the partition wall 300.

According to this configuration of the present disclosure, the thermal safety of the battery pack may be improved. When a thermal event occurs, the venting gas g passing through the venting hole 211 may pressurize the module cover 400. As a result, the module cover 400 and the pack cover 150 may move upward or in the +Z-axis direction, and the pressure inside the battery pack may be prevented from rapidly increasing.

Referring to FIGS. 1 to 5, the module cover 400 of the battery pack according to the first embodiment of the present disclosure may include a top cover 410 and a side cover 420. The top cover 410 may cover the top plate of the battery module 200. The top cover 410 may have a plate shape. The side cover 420 may extend downward or in the -Z-axis direction from the top cover 410. The side cover 420 may have a plate shape. The side cover 420 may cover the side plate of the battery module 200 or the side surface of the battery module 200. The side cover 420 may be provided as a pair. The pair of side covers 420 may cover the pair of side plates of the battery module 200, respectively. The side cover 420 and the top cover 410 may be formed integrally. The side cover 420 may be located between the first partition wall 310 and the battery module 200.

The module cover 400 may contain a metal material. For example, the module cover 400 may contain a stainless steel or aluminum material. In addition, the module cover 400 may have a thin thickness. For example, the module cover 400 may have a thickness of 1 mm.

According to this configuration of the present disclosure, when a thermal event occurs, the module cover 400 may stably move upward or in the +Z-axis direction. The side cover 420 may guide the movement of the module cover 400.

In addition, according to this configuration of the present disclosure, the module cover 400 may be arranged to completely surround the battery module 200 due to the side cover 420. As a result, the module cover 400 may more reliably block the venting gas g generated from the outside of the battery module 200 from flowing into the battery module 200.

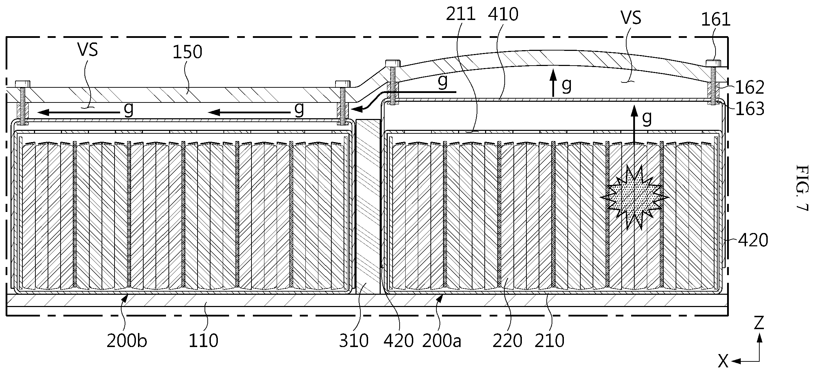

FIG. 6 is a partial cross-sectional view of the first embodiment, taken along the cutting line A-A' of FIG. 1. FIG. 7 is a cross-sectional view of the first embodiment, taken along the cutting line A-A', when a thermal event occurs.

Referring to FIGS. 1 to 7, the fastening member 161 of the battery pack according to the first embodiment of the present disclosure may penetrate the spacer 162. In addition, the fastening member 161 may penetrate the pack cover 150, the spacer 162, and the module cover 400. In addition, the fastening member 161 may penetrate the fastening hole 151, 401. For example, the fastening member 161 may be a bolt. In addition, the fastening member 161 may be coupled with a nut 163. In this case, the nut 163 may be located between the module cover 400 and the battery module 200. The fastening member 161 and the nut 163 may fasten, couple, or fix the pack cover 150, the spacer 162, and the module cover 400.

According to this configuration of the present disclosure, the thermal safety of the battery pack may be improved. Since the module cover 400, the spacer 162, and the pack cover 150 are stably coupled, the venting space VS may be stably secured even if the pressure inside the case 100 increases due to a thermal event.

Referring to FIG. 7, when a thermal event occurs in the battery module 200a of the battery pack according to the first embodiment of the present disclosure, the module cover 400 may move to the outer side or the upper side of the battery module 200a. The venting gas g may be discharged between the side cover 420 and the first partition wall 310. Also, the venting gas g may be discharged toward the end cover 240 of the battery module 200a. The discharged venting gas g may move along the venting space VS. At this time, the venting gas g may be blocked from flowing into a neighboring battery module 200b by the module cover 400. The venting gas g may be discharged to the outside of the battery pack through the venting device 600.

Hereinafter, features different from the former embodiment will be described in detail.

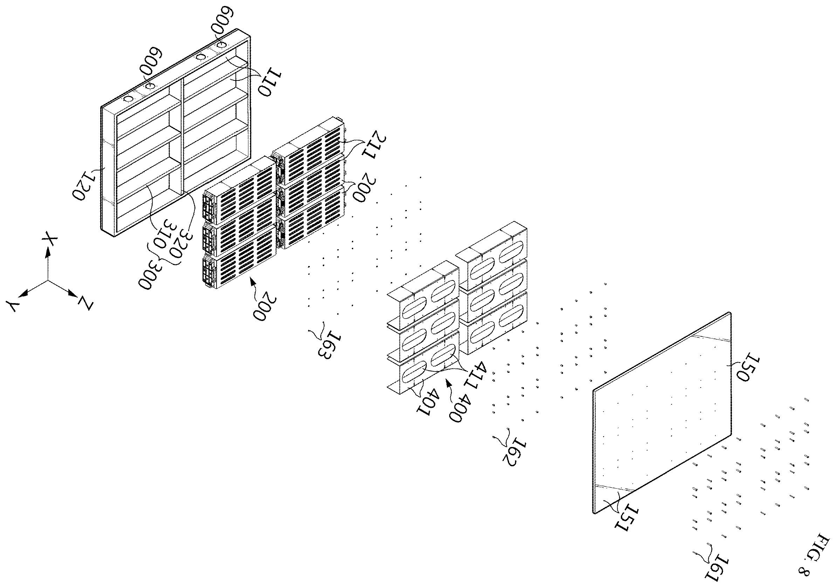

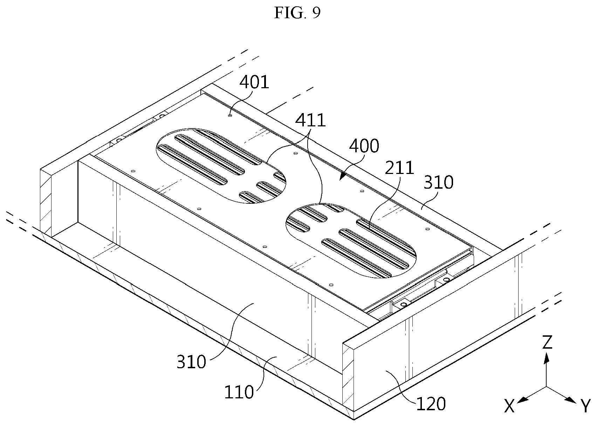

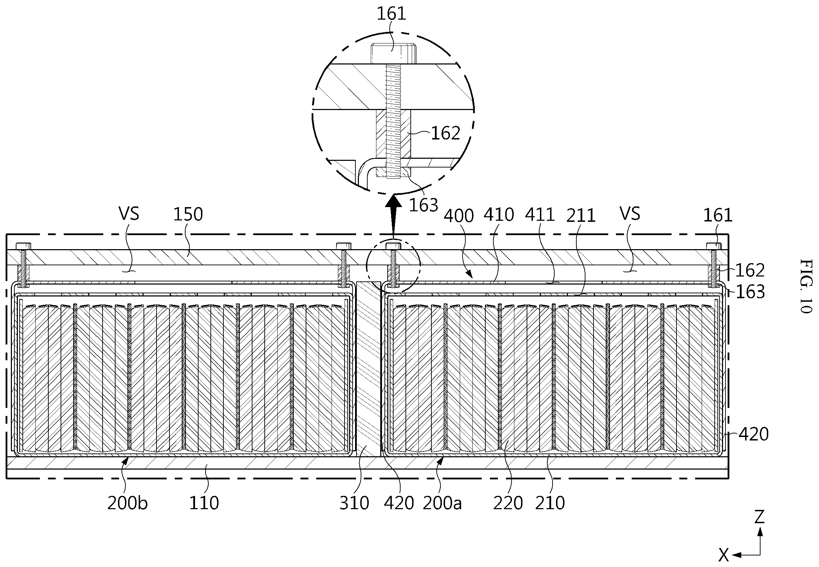

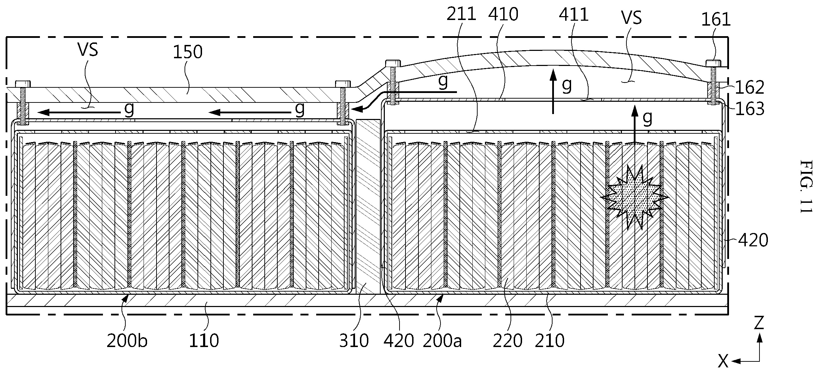

FIG. 8 is an exploded view showing some components of the battery pack according to the second embodiment of the present disclosure. FIG. 9 is an enlarged view showing some components of the battery pack according to the second embodiment of the present disclosure. FIG. 10 is a partial cross-sectional view of the second embodiment, taken along the cutting line A-A' of FIG. 1. FIG. 11 is a cross-sectional view of the second embodiment, taken along the cutting line A-A', when a thermal event occurs.

Referring to FIGS. 8 to 11, the module cover 400 of the battery pack according to the second embodiment of the present disclosure may have a discharge hole 411 facing the venting hole 211. In addition, the discharge hole 411 may have a larger size than the venting hole 211. The discharge hole 411 may face the plurality of venting holes 211.

According to this configuration of the present disclosure, the thermal safety of the battery module 200 may be improved. Since the module cover 400 has a discharge hole 411, the venting gas g may be discharged more easily.

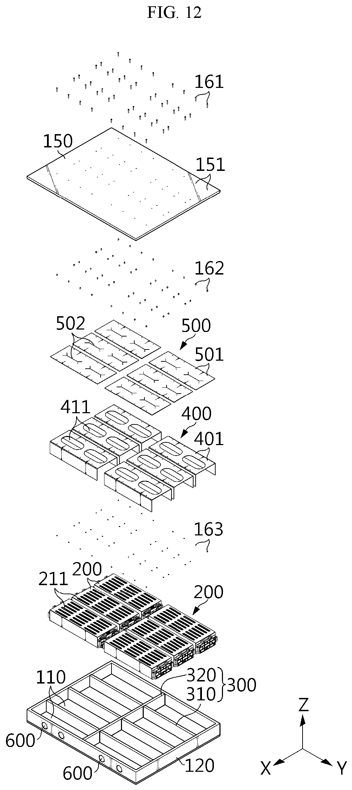

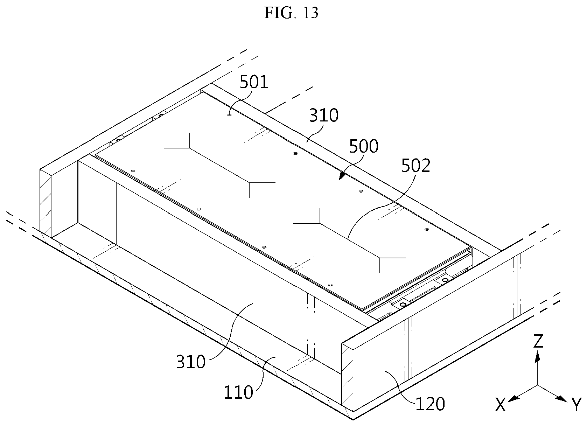

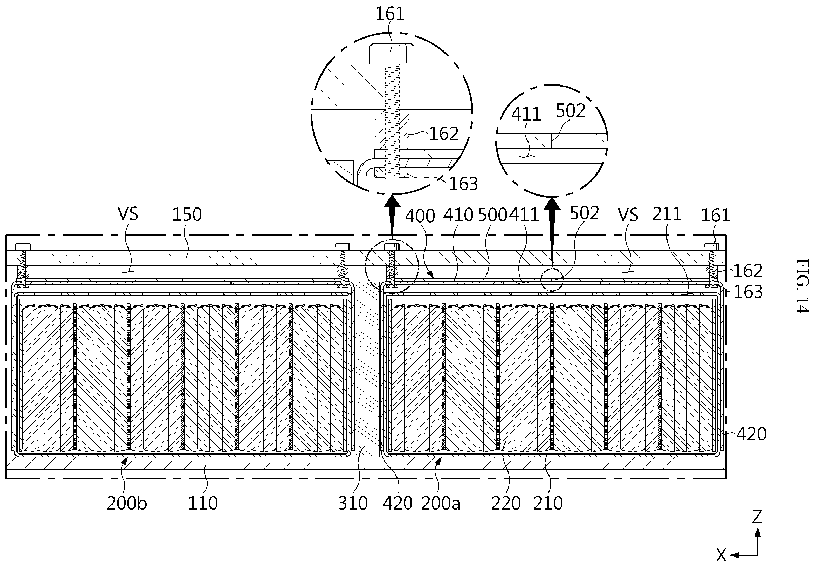

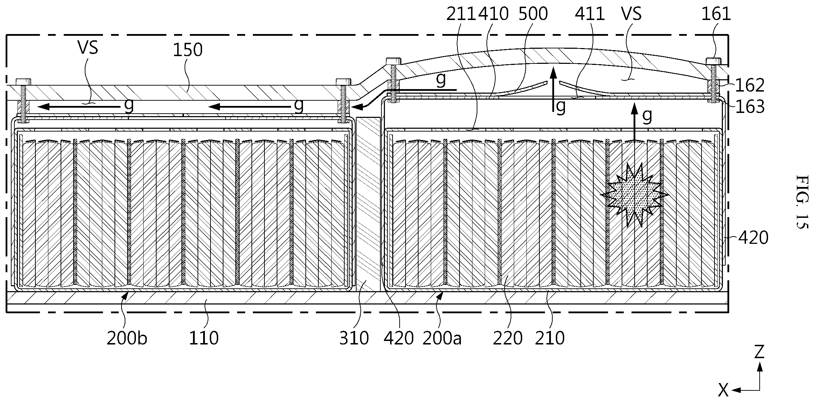

FIG. 12 is an exploded view showing some components of the battery pack according to the third embodiment of the present disclosure. FIG. 13 is an enlarged view showing some components of the battery pack according to the third embodiment of the present disclosure. FIG. 14 is a partial cross-sectional view of the third embodiment, taken along the cutting line A-A' of FIG. 1. FIG. 15 is a cross-sectional view of the third embodiment, taken along the cutting line A-A', when a thermal event occurs.

Referring to FIGS. 12 to 15, the battery pack according to the third embodiment of the present disclosure may further include a venting cover 500. The venting cover 500 may be positioned between the module cover 400 and the pack cover 150. In addition, the venting cover 500 may have a plate shape. The venting cover 500 may cover the top cover 410. In addition, the venting cover 500 may cover the discharge hole 411.

The venting cover 500 may contain a material having high refractory properties. In addition, the venting cover 500 contain include a material having high heat resistance. For example, the venting cover 500 may contain at least one of a silicone material, a mica material, or a ceramic material. In addition, the venting cover 500 may have a thin thickness. For example, the venting cover 500 may have a thickness of 0.5 mm.

According to this configuration of the present disclosure, the thermal safety of the battery pack may be improved. The venting cover 500 covers the discharge hole 411, thereby more reliably blocking the venting gas g generated outside the battery module 200 from flowing into the battery module 200.

Referring to FIGS. 12 to 15, the venting cover 500 of the battery pack according to the third embodiment of the present disclosure may be positioned between the module cover 400 and the spacer 162. The fastening member 161 may penetrate the venting cover 500. Also, the fastening member 161 may penetrate the fastening holes 151, 401, 501. For example, the fastening member 161 may be a bolt. The fastening member 161 and the nut 163 may fasten, couple, or fix the pack cover 150, the spacer 162, the module cover 400, and the venting cover 500.

According to this configuration of the present disclosure, the thermal safety of the battery pack may be improved. Since the module cover 400, the spacer 162, the venting cover 500, and the pack cover 150 are stably coupled, the venting space VS may be stably secured even if the pressure inside the case 100 increases due to a thermal event.

Referring to FIGS. 12 to 15, the venting cover 500 of the battery pack according to the third embodiment of the present disclosure may include a score line 502. The score line 502 may face the discharge hole 411. The score line 502 may be provided in plurality so as to correspond to the plurality of discharge holes 411 in one-to-one relationship. The score line 502 may be called using a term that includes and collectively refers to a perforated line 502, a notching line 502, a cutting line 502, a shredding line 502, a tear line 502, or a separation line 502. The score line 502 may be configured to be easily separated by pressure applied to the venting cover 500.

According to this configuration of the present disclosure, the thermal safety of the battery pack may be improved. Since the venting cover 500 has the score line 502, the venting gas g may be discharged more easily.

In addition, according to this configuration of the present disclosure, the score line 502 may not be separated by the venting gas g generated from the outside of the battery module 200. Accordingly, the venting cover 500 may more reliably block the venting gas g generated from the outside of the battery module 200 from flowing into the battery module 200 by covering the discharge hole 411.

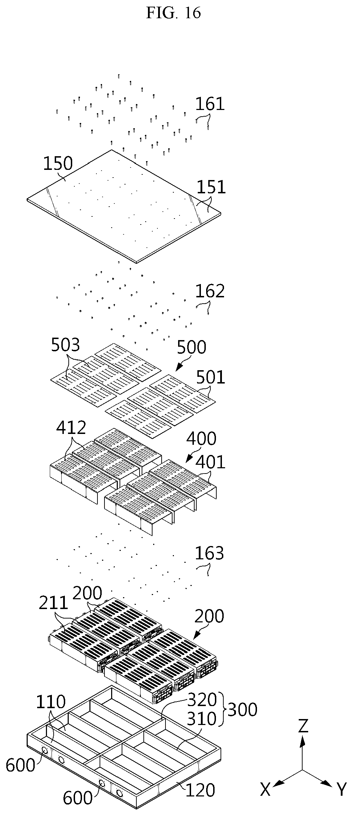

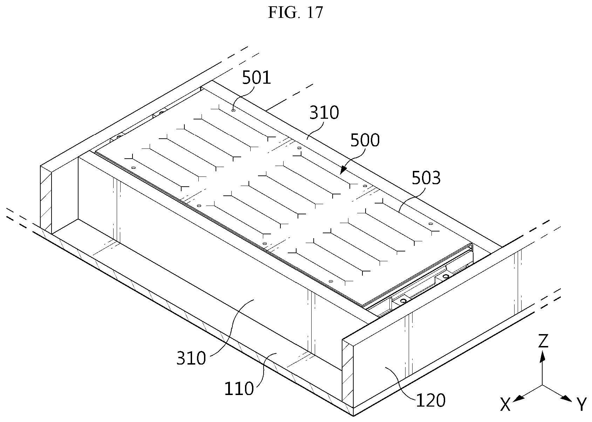

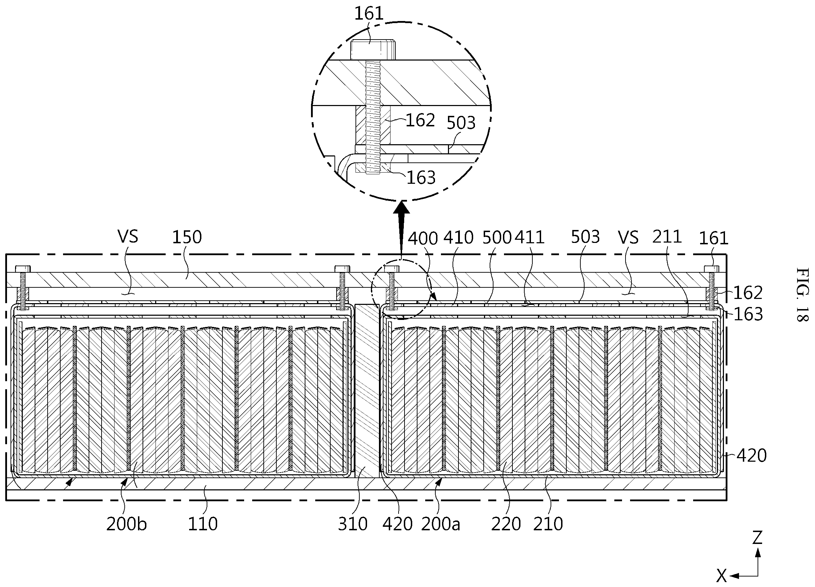

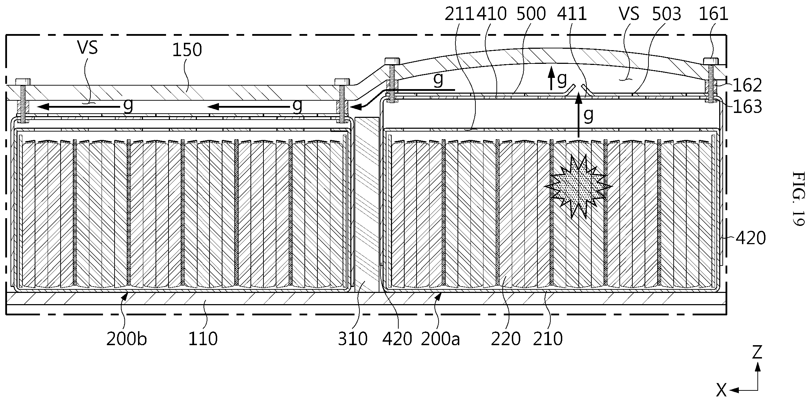

FIG. 16 is an exploded view showing some components of the battery pack according to the fourth embodiment of the present disclosure. FIG. 17 is an enlarged view showing some components of the battery pack according to the fourth embodiment of the present disclosure. FIG. 18 is a partial cross-sectional view of the fourth embodiment, taken along the cutting line A-A' of FIG. 1. FIG. 19 is a cross-sectional view of the fourth embodiment, taken along the cutting line A-A', when a thermal event occurs.

Referring to FIGS. 16 to 19, the venting hole 211 of the battery pack according to the fourth embodiment of the present disclosure may be provided in plurality. Also the discharge hole 412 may be provided in pluraliy so as to correspond to the plurality of venting holes 211 in one-to-one relationship. The plurality of discharge holes 412 may face the venting hole 211, respectively. The plurality of discharge holes 412 may be configured to have substantially the same shape as the facing venting holes 211, respectively. For example, the venting hole 211 and the discharge hole 412 may have an oval shape or a circular shape.

In addition, the score line 503 may be provided in plurality. The plurality of score lines 503 may be provided to correspond to the plurality of discharge holes 412 in one-to-one relationship. The plurality of score lines 503 may face the discharge holes 412, respectively.

According to this configuration of the present disclosure, the thermal safety of the battery pack may be improved. Since the venting hole 211, the discharge hole 412, and the score line 503 are arranged in alignment, the venting gas g may be discharged more easily.

In addition, the battery pack according to the present disclosure may further include various components, for example components of the battery pack known at the time of filing of this application, such as a BMS, a bus bar, a relay, a current sensor, etc. in addition to the battery module.

The battery pack according to the present disclosure may be applied to vehicles such as electric vehicles or hybrid vehicles. That is, the vehicle according to the present disclosure may include the battery pack according to the present disclosure described above. In addition, the vehicle according to the present disclosure may further include various other components included in the vehicle in addition to the battery pack. For example, the vehicle according to the present disclosure may further include a body, a motor, and control devices such as an ECU (electronic control unit).

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a case providing a space therein and having a pack cover;
a battery module located inside the case;
a module cover located between the battery module and the pack cover and spaced apart from the pack cover; and
a fastening member configured to fix the inner cover and the pack cover.

2. The battery pack according to claim 1, further comprising:
a spacer located between the inner cover and the pack cover.

3. The battery pack according to claim 2,
wherein the fastening member penetrates the spacer.

4. The battery pack according to claim 1,
wherein the battery module includes:
a module case providing a space therein and having a venting hole facing the module cover; and
a battery cell located inside the module case.

5. The battery pack according to claim 4,
wherein the module cover has a discharge hole facing the venting hole.

6. The battery pack according to claim 5,
wherein the venting hole is provided in plurality, and
wherein the discharge hole is provided in plurality so as to correspond to the plurality of venting holes in one-to-one relationship.

7. The battery pack according to claim 6, further comprising:
a venting cover located between the module cover and the pack cover and configured to cover the discharge hole.

8. The battery pack according to claim 7,
wherein the venting cover is located between the module cover and the spacer.

9. The battery pack according to claim 7,
wherein the venting cover has a score line facing the discharge hole.

10. The battery pack according to claim 1,
wherein the module cover includes:
a top cover configured to cover an upper surface of the battery module; and
a side cover configured to extend from the top cover and cover a side surface of the battery module.

11. The battery pack according to claim 1,
wherein the module cover is configured to be movable outward from the battery module when a thermal event occurs from the battery module.

12. A vehicle comprising the battery pack according to any one of claims 1 to 11.
